# FASCICULE DE BREVET EUROPEEN

(11) **EP 0 645 496 B1**
(45) Date de publication et mention de la délivrance du brevet: **04.09.1996**
(21) Numéro de dépôt: 94402148.4
(22) Date de dépôt: 27.09.1994
(51) Int. Cl.: E02B 17/08, B23K 9/035

(54) **Procédé et dispositif d'assemblage des membrures des jambes de support d'une plate-forme pétrolière**
Verfahren und Vorrichtung für die Montage der Beingurte einer Ölplatform
Process and device for assembling the flanges of the supporting-legs of an oil-platform

(30) Priorité: 28.09.1993 FR 9311517
(43) Date de publication de la demande: 29.03.1995
(73) Titulaire: TECHNIP GEOPRODUCTION, F-92090 Paris la Défense (FR)
(72) Inventeur: Thomas, Pierre Armand, F-92800 Puteaux (FR); Naudin, Jean Claude, F-75013 Paris (FR)
(74) Mandataire: Lanceplaine, Jean-Claude

(56) Documents cités:
- DE-A- 1 927 613
- FR-A- 2 542 234
- FR-A- 2 560 247
- GB-A- 2 020 590
- PATENT ABSTRACTS OF JAPAN vol. 7, no. 110 (M-214) (1255) 13 Mai 1983 & JP-A-58 030 887 (MITSUI ZOSEN) 23 Février 1983

## Description

La présente invention pour objet un procédé et un dispositif comportant des membrures des jambes de support d'une plate-forme pétrolière de forage et d'exploitation en mer (voir p.ex. JP-A-58-30887).

Les plates-formes pétrolières et notamment les plates-formes auto-élévatrices comportent des jambes prenant appui sur le fond marin et une coque montée déplaçable et réglable en hauteur le long des jambes.

L'ensemble de la plate-forme est amenée en flottaison jusqu'au site de forage ou d'exploitation et les jambes sont descendues jusqu'au contact du fond marin, puis en prenant appui sur les jambes, la coque est hissée au-dessus du niveau de la mer, jusqu'à une altitude qui la met hors de portée des plus hautes vagues.

Chaque jambe est constituée par des membrures verticales, par exemple au nombre de trois, reliées entre elles par un treillis de poutrelles métalliques.

Chaque membrure est constituée par des tronçons soudés bout à bout et formés chacun, d'une part, par une plaque rectangulaire et, d'autre part, par des raidisseurs en forme de demi-coquilles soudés chacun sur l'une des faces principales de ladite plaque.

Les plaques rectangulaires comportent sur leurs faces latérales des dents qui forment, sur une partie de la longueur des membrures, des crémaillères diamétralement opposées destinées à coopérer avec des pignons de sortie de mécanismes d'entraînement montés sur la coque de la plate-forme.

Chaque raidisseur soudé sur l'une des faces principales des plaques rectangulaires possède une longueur inférieure à la longueur d'une plaque de façon à ménager, à chaque extrémité de la plaque, un espace libre permettant de souder les tronçons bout à bout au moment de l'assemblage de la membrure.

Pour assurer la continuité des raidisseurs, une pièce de liaison en forme de demi-coquille et de profil correspondant au profil des raidisseurs, est positionnée au niveau de chaque espace libre et dans le prolongement desdits raidisseurs, après le soudage bout à bout des tronçons de la membrure.

Cette disposition permet de rabouter et de souder directement sur le chantier les tronçons de la membrure qui ont été préalablement préfabriqués en atelier.

Ces pièces de liaison sont soudées de l'extérieur sur les faces principales des plaques rectangulaires et sur les bords des raidisseurs pour former de chaque côté desdites plaques des raidisseurs continus permettant ainsi de rigidifier les membrures.

Ces membrures, qui supportent la coque de la plate-forme, sont fortement sollicitées en fatigue et les cordons de soudure notamment des pièces de liaison sur les autres éléments de la membrure sont également fortement sollicités.

Or, avec les techniques d'assemblage et soudage utilisées jusqu'à présent, les cordons de soudure qui ne peuvent être réalisés que de l'extérieur, présentent des défauts de raccordement plus particulièrement au niveau de la racine de ces cordons de soudure, c'est à dire à l'intérieur de la pièce de liaison dans les zones de raccordement avec les plaques rectangulaires et les raidisseurs.

Ces défauts sont des zones de concentration des contraintes qui sont incompatibles avec les fortes sollicitations en fatigue que subissent les jambes des plates-formes pétrolières.

L'invention a pour but d'éviter ces inconvénients en proposant un procédé et un dispositif d'assemblage permettant de réaliser, à l'intérieur de la membrure, un raccordement progressif des cordons de soudure des pièces de liaison avec les autres éléments de la membrure afin d'éviter la formation des zones de concentration des contraintes.

L'invention a pour objet un procédé d'assemblage des membrures des jambes de support d'une plate-forme pétrolière, dans lequel :
- on soude de l'extérieur, sur chaque face principale d'une plaque rectangulaire, un raidisseur en forme de demi-coquille, ladite plaque rectangulaire comportant sur chacune de ses faces latérales des dents formant une crémaillère,
- on soude bout à bout plusieurs plaques rectangulaires munies desdits raidisseurs pour former une membrure, chaque raidisseur possédant une longueur inférieure à la longueur d'une plaque pour ménager, au niveau de la soudure des plaques entre elles, un espace libre entre deux raidisseurs adjacents,
- on positionne, au niveau de chaque espace libre et dans le prolongement des raidisseurs, une pièce de liaison en forme de demi-coquille,
- et on soude de l'extérieur chaque pièce de liaison sur la face principale des plaques et sur les rebords des raidisseurs adjacents pour former de chaque côté desdites plaques des raidisseurs continus, caractérisé en ce que, préalablement au positionnement et au soudage de chaque raidisseur et de chaque pièce de liaison, on place sur le bord interne de chaque zone de raccordement du raidisseur avec les plaques et de la pièce de liaison avec les plaques et les raidisseurs, une latte en céramique adaptée au profil de chaque zone de raccordement et destinée à mouler la racine du cordon de soudure.

L'invention a également pour objet un dispositif comportant des membrures assemblées par le procédé d'assemblage selon la revendication 1, les membrures formant des jambes de support d'une plate-forme pétrolière, chaque membrure comprenant des tronçons formés chacun par une plaque rectangulaire destinée à être soudée bout à bout avec la plaque rectangulaire des tronçons adjacents et comportant sur chacune de ses faces latérales des dents formant une crémaillère, un raidisseur en forme de demi-coquille soudé sur chaque face principale de la plaque rectangulaire, chaque raidisseur possédant une longueur inférieure à la longueur d'une plaque pour ménager au niveau de la soudure de deux plaques adjacentes, un espace libre et des pièces de liaison en forme de demi-coquille soudées sur chaque face principale des plaques et le rebord de chaque raidisseur adjacent pour former des raidisseurs continus de chaque côté desdites plaques, caractérisé en ce qu'il comporte des moyens de soudage d'une part des raidisseurs sur les faces principales des plaques et d'autre part des pièces de liaison sur les faces principales des plaques et sur les rebords de chaque raidisseur adjacent et des moyens de moulage de la racine des cordons de soudure des raidisseurs et des pièces de liaison, disposés sur le bord interne de chaque zone de raccordement desdits raidisseurs avec les plaques rectangulaires et desdites pièces de liaison avec les plaques rectangulaires et les raidisseurs.

Selon d'autres caractéristiques de l'invention :
- les moyens de moulage de la racine des cordons de soudure sont formés par des lattes en céramique disposées sur une support relié à la membrure par des organes de liaison,
- les lattes en céramique destinées à mouler les racines des cordons de soudure des raidisseurs et des pièces de liaison avec les plaques rectangulaires ont une section en forme de triangle dont les sommets sont arrondis,
- les lattes en céramique destinées à mouler les racines des cordons de soudure des raidisseurs et des pièces de liaison avec les plaques rectangulaires sont formées par des éléments indépendants et reliés entre eux par un câble tenseur traversant lesdits éléments,
- les lattes en céramique destinées à mouler les racines de cordon de soudure entre les pièces de liaison et les raidisseurs sont formées par des éléments articulés entre eux pour épouser le rayon de courbure desdits raidisseurs,
- chaque élément a une section rectangulaire et comporte sur sa face disposée en regard du cordon de soudure une gorge.

L'invention sera mieux comprise à l'aide de la description qui va suivre, donnée uniquement à titre d'exemple et faite en se référant aux dessins annexés, sur lesquels :
- la Fig. 1 est une vue schématique en élévation d'une plate-forme pétrolière par exemple auto-élévatrice,
- la Fig. 2 est une vue schématique en perspective d'une portion d'une membrure d'une jambe support de la plate-forme pétrolière,
- la Fig. 3 est une vue schématique en perspective éclatée de la portion de membrure représentée à la Fig. 2,
- la Fig. 4 est une vue en coupe selon la ligne 4-4 de la Fig. 2,
- la Fig. 5 est une vue en coupe selon la ligne 5-5 de la Fig. 2,
- la Fig. 6 est une vue schématique en perspective des moyens de moulage du cordon de soudure des raidisseurs et des pièces de liaison sur les plaques rectangulaires,
- la Fig. 7 est une vue schématique en perspective des moyens de moulage du cordon de soudure entre les pièces de liaison et les raidisseurs.

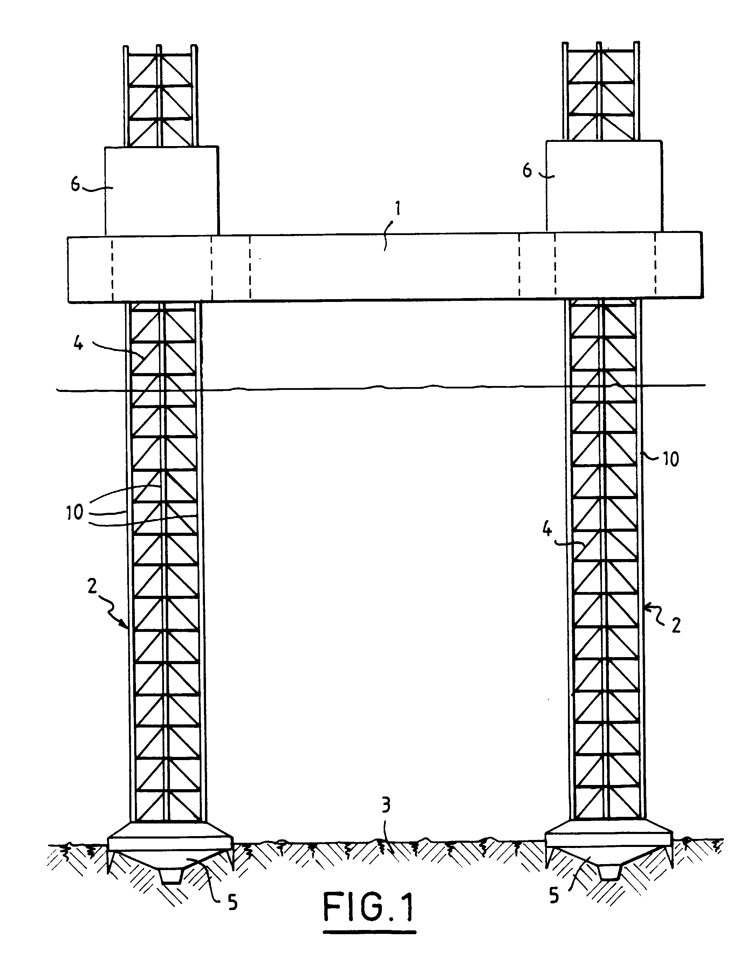

Sur la Fig. 1, on a représenté schématiquement une plate-forme pétrolière auto-élévatrice comprenant une coque 1 montée déplaçable sur des jambes verticales 2 destinées à prendre appui sur le fond marin 3, lorsque la plate-forme est en position de forage ou d'exploitation.

Chacune des jambes verticales 2 présente, dans le cas présent, une section triangulaire et est constituée de trois membrures 10, reliées entre elles par un treillis de poutrelles métalliques 4.

Chaque jambe 2 se termine à sa partie inférieure par un pied 5.

La plate-forme est par ailleurs équipée, au niveau de chaque jambe 2, d'un mécanisme d'entraînement et de suspension 6 de la coque 1 par rapport auxdites jambes 2.

Les mécanismes d'entraînement 6 permettent de descendre les jambes 2 jusqu'au contact du fond marin, puis en prenant appui sur les jambes, de hisser la coque 1 au-dessus de la mer jusqu'à une altitude qui la met hors de portée des plus hautes vagues.

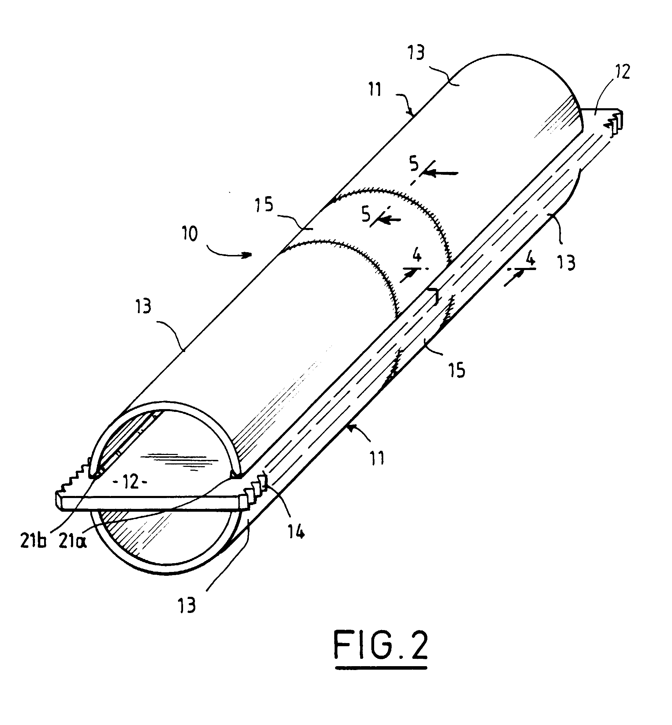

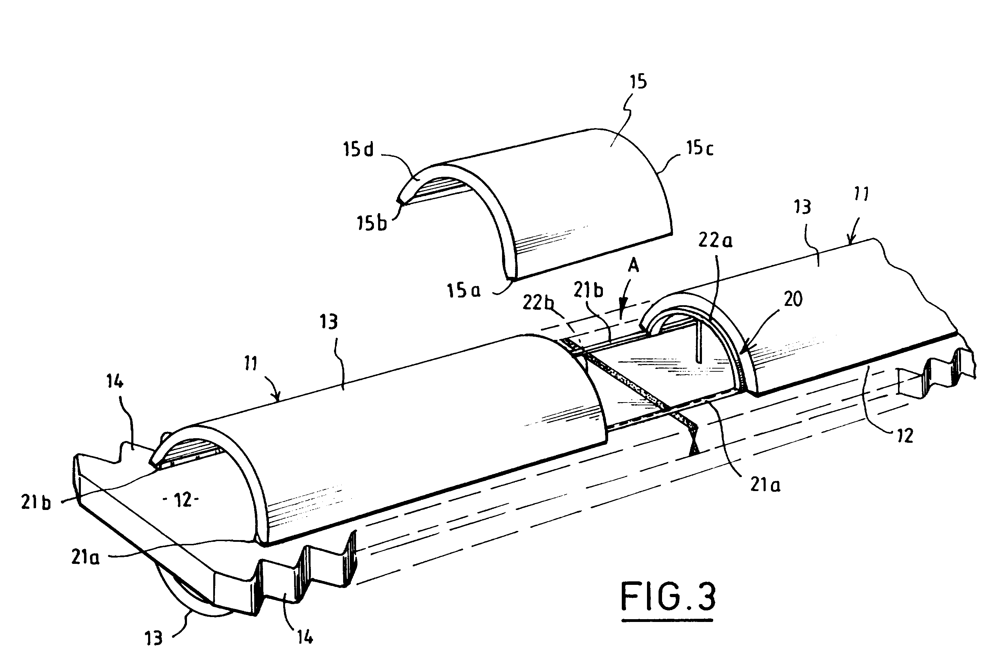

Comme représenté sur les Figs. 2 et 3, chaque membrure 10 des jambes 2 se compose de plusieurs tronçons 11 formés chacun d'une plaque rectangulaire 12 et de deux raidisseurs 13 en forme de demi-coquille.

Les extrémités des plaques rectangulaires 12 sont chanfreinées pour permettre le soudage bout à bout des tronçons 11 au moment de l'assemblage de la membrure 10.

Les faces latérales des plaques rectangulaires 12 comportent des dents 14 pour former sur la membrure 10, deux crémaillères diamétralement opposées et destinées à coopérer avec des pignons de sortie, non représentés, des mécanismes d'entraînement 6.

Chaque raidisseur 13 est soudé de l'extérieur sur l'une des faces principales de la plaque rectangulaire 12 correspondante et possède une longueur inférieure à la plaque 12 de façon à ménager un espace libre A au niveau de la soudure de deux plaques 12 adjacentes (Fig. 3) ce qui permet de souder les tronçons 11 bout à bout au moment de l'assemblage de la membrure 10.

Pour permettre le soudage des raidisseurs 13, les rebords longitudinaux de ces raidisseurs 13 sont chanfreinés.

Ainsi, les tronçons 11 composant la membrure 10 peuvent être préfabriqués en atelier, puis raboutés et soudés entre eux directement sur le chantier.

Chaque membrure 10 comporte également des pièces de liaison 15 intercal aires en forme de demi-coquille et de profil correspondant au profil des raidisseurs 13.

Une pièce de liaison 15 est positionnée au niveau de chaque espace libre A et dans le prolongement des raidisseurs 13 après le soudage bout à bout des tronçons 11.

Ces pièces de liaison 15 sont soudées de l'extérieur sur les faces principales des plaques rectangulaires 12 et sur les rebords des raidisseurs 13 pour former de chaque côté desdites plaques 12 des raidisseurs continus.

Pour permettre le soudage des pièces de liaison 15, les rebords de ces pièces de liaison 15 ainsi que le rebord de chaque extrémité des raidisseurs 13 sont chanfreinés.

Le dispositif d'assemblage des pièces de liaison 15 comporte des moyens de soudage, non représentés sur les figures, des raidisseurs sur les faces principales des plaques 12 et des pièces de liaison 15 sur les faces principales des plaques 12 et sur les rebords de chaque raidisseur 13 adjacent et des moyens de moulage 20 (Fig. 3) de la racine des cordons de soudure dedits raidisseurs 13 sur les faces principales des plaques 12 et desdites pièces de liaison sur les faces principales des plaques 12 et sur les rebords des raidisseurs 13 adjacents.

Ces moyens de moulage 20 sont disposés sur le bord interne de chaque zone de raccordement des raidisseurs 13 avec les plaques 12 et des pièces de liaison 15 avec les plaques 12 et les raidisseurs 13 et sont formés par des lattes en céramique 21a, 21b et 22a, 22b.

Une latte 22a est disposée sur le bord interne de la zone de raccordement entre l'un des rebords longitudinaux de chaque raidisseur 13 et la face principale de la plaque 12 correspondante et une latte 22b est disposée sur le bord interne de la zone de raccordement entre l'autre rebord longitudinal de chaque raidisseur 13 et la face principale de la plaque 12 correspondante.

D'autre part, une latte 21a est disposée sur le bord interne de la zone de raccordement entre le rebord longitudinal 15a de la pièce de liaison 15 et les faces principales des plaques 12 et une latte 21b est disposée sur le bord interne de la zone de raccordement entre le rebord longitudinal 15b de la pièce de liaison 15 et les faces principales desdites plaques 12.

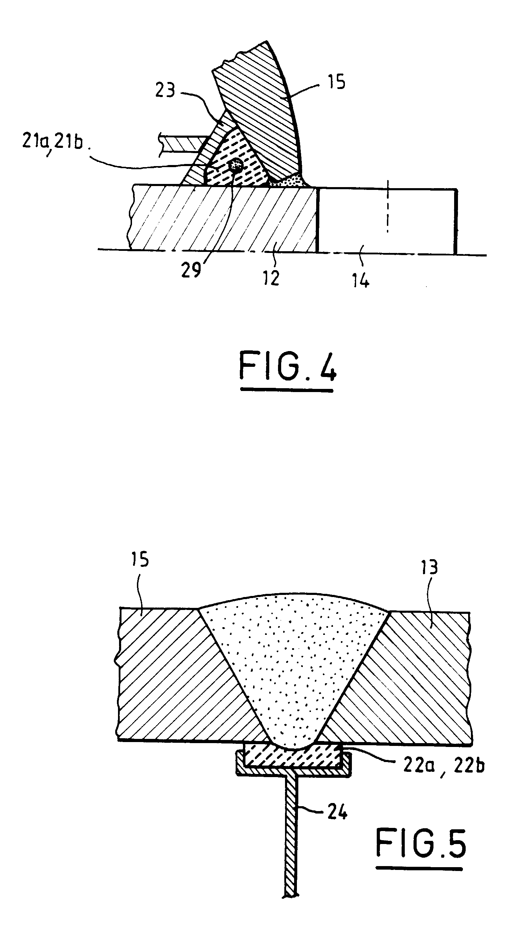

Les lattes 21a et 21b forment une ligne continue et possèdent une section en forme de triangle dont les sommets sont arrondis de façon à épouser la forme du raccordement entre les raidisseurs 13, la pièce de liaison 15 et les plaques 12, comme représenté à la Fig. 4.

Ces lattes 21a et 21b sont montées chacune sur un support 23 par exemple en acier (Fig. 4).

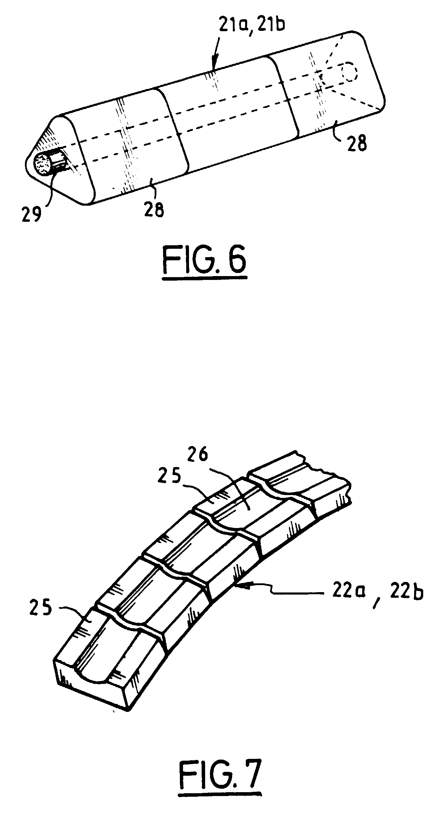

Comme représenté à la Fig. 6, les lattes 21a et 21b sont formées par des éléments indépendants 28 reliés entre eux par un câble tenseur 29 traversant lesdits éléments 28.

Une latte 22a est disposée sur le bord interne de la zone de raccordement entre le rebord latéral 15c de la pièce de liaison 15 et le raidisseur 13 adjacent et une latte 22b est disposée sur le bord interne de la zone de raccordement entre le rebord latéral 15d de la pièce de liaison 15 et le raidisseur 13 adjacent à ce rebord latéral.

Les lattes 22a et 22b sont montées sur un support 24 par exemple en acier (Fig. 5).

Comme représenté à la Fig. 7, les lattes 22a et 22b sont formées par les éléments 25 de section rectangulaire et articulés entre eux pour épouser le rayon de courbure des raidisseurs 13 et des pièces de liaison 15.

Chaque élément 25 comporte, sur sa face disposée en regard du cordon de soudure, une gorge 26.

Les supports 23 et 24 peuvent être soudés sur les plaques 12 et les raidisseurs 13 ou peuvent être fixés sur lesdites plaques et lesdits raidisseurs par des organes de liaison appropriés.

L'assemblage des membrures 10 s'effectue de la manière suivante.

Tout d'abord, on place, sur le bord interne de chaque zone de raccordement des raidisseurs 13 avec les faces principales de la plaque rectangulaire 12 correspondante, les lattes en céramique 21a et 21b et on soude de l'extérieur, sur chaque face principale d'une plaque rectangulaire 12, un raidisseur 13 pour former des tronçons 11, puis on soude bout à bout lesdits tronçons 11 directement sur le chantier afin de réaliser la membrure 10.

Ensuite, on place, sur le bord interne de chaque zone de raccordement de la pièce de liaison 15 avec les plaques 12 et les raidisseurs 13, les lattes en céramique 21a, 21b et 22a, 22b et on soude de l'extérieur chaque pièce de liaison 15 sur la face principale des plaques 12 et sur les rebords des raidisseurs 13 adjacents pour former de chaque côté desdites plaques des raidisseurs continus.

Les lattes en céramique 21a, 21b et 22a, 22b, tout en facilitant le travail des soudeurs, supportent et moulent les racines des cordons de soudure ce qui permet d'obtenir un raccordement progressif des différentes pièces entre elles avec moins de risque de défauts et, de ce fait, une meilleure tenue à la fatigue.

De plus, les tolérances d'assemblage des pièces sont plus larges permettant ainsi de réduire le coût de la préparation de ces pièces et d'augmenter la vitesse d'exécution des soudures sur les lattes en céramique et demande un personnel moins qualifié.

## Revendications

1. Procédé d'assemblage des membrures (10) des jambes (2) de support d'une plate-forme pétrolière, dans lequel :
- on soude de l'extérieur, sur chaque face principale d'une plaque rectangulaire (12), un raidisseur (13) en forme de demi-coquille, ladite plaque rectangulaire (12) comportant sur chacune de ses faces latérales des dents (14) formant une crémaillère,
- on soude bout à bout plusieurs plaques rectangulaires (12) munies desdits raidisseurs (13) pour former une membrure (10), chaque raidisseur (13) possédant une longueur inférieure à la longueur d'une plaque (12) pour ménager, au niveau de la soudure des plaques (12) entre elles, un espace libre entre deux raidisseurs (13) adjacents,
- on positionne, au niveau de chaque espace libre et dans le prolongement des raidisseurs (13) , une pièce de liaison (15) en forme de demi-coquille,
- et on soude de l'extérieur chaque pièce de liaison (15) sur la face principale des plaques (12) et sur les rebords des raidisseurs adjacents pour former de chaque côté desdites plaques des raidisseurs continus, caractérisé en ce que, préalablement au positionnement et au soudage de chaque raidisseur (13) et de chaque pièce de liaison (15), on place sur le bord interne de chaque zone de raccordement d'une part du raidisseur (13) avec les plaques (12) et d'autre part de la pièce de liaison (15) avec les plaques (12) et les raidisseurs (13), une latte en céramique (21a, 21b ; 22a, 22b) adaptée au profil de chaque zone de raccordement et destinée à mouler la racine du cordon de soudure.

2. Dispositif comportant des membrures assemblées par le procédé d'assemblage selon la revendication 1, les membrures (10) formant des jambes (2) de support d'une plate-forme pétrolière, chaque membrure comprenant des tronçons (11) formés chacun par une plaque rectangulaire (12) destinée à être soudée bout à bout avec la plaque rectangulaire (12) des tronçons (11) adjacents et comportant sur chacune de ses faces latérales des dents (14) formant une crémaillère, un raidisseur (13) en forme de demi-coquille soudé sur chaque face principale de la plaque rectangulaire (12), chaque raidisseur (13) possédant une longueur inférieure à la longueur d'une plaque (12) pour ménager, au niveau de la soudure de deux plaques (12) adjacentes, un espace libre, et des pièces de liaison (15) en forme de demi-coquille soudées sur chaque face principale des plaques (12) et le rebord de chaque raidisseur (13) adjacent pour former des raidisseurs continus de chaque côté desdites plaques (12), caractérisé en ce qu'il comporte des moyens de soudage d'une part des raidisseurs (13) sur les faces principales des plaques (12) et d'autre part des pièces de liaison (15) sur les faces principales des plaques (12) et sur les rebords de chaque raidisseur (13) adjacent et des moyens (21a, 21b ; 22a, 22b) de moulage de la racine des cordons de soudure des raidisseurs (13) et des pièces de liaison (15), disposés sur le bord interne de chaque zone de raccordement desdits raidisseurs (13) avec les plaques rectangulaires (12) et desdites pièces de liaison (15) avec les plaques rectangulaires (12) et les raidisseurs (13).

3. Dispositif selon la revendication 2, caractérisé en ce que les moyens de moulage de la racine des cordons de soudure sont formés par des lattes en céramique (21a, 21b ; 22a, 22b) montées sur un support (23, 24) relié à la membrure (10) par des organes de liaison.

4. Dispositif selon la revendication 3, caractérisé en ce que les lattes en céramique (21a, 21b) destinées à mouler les racines des cordons de soudure des raidisseurs (13) et des pièces de liaison (15) avec les plaques rectangulaires (12) ont une section en forme de triangle dont les sommets sont arrondis.

5. Dispositif selon la revendication 4, caractérisé en ce que les lattes (21a, 21b) sont formées par des éléments (28) indépendants et reliés entre eux par un câble tenseur (29) traversant lesdits éléments.

6. Dispositif selon la revendication 3, caractérisé en ce que les lattes en céramique (22a, 22b) destinées à mouler les racines des cordons de soudure entre les pièces de liaison (15) et les raidisseurs (13) sont formées par des éléments (25) articulés entre eux pour épouser le rayon de courbure desdits raidisseurs (13).

7. Dispositif selon la revendication 6, caractérisé en ce que chaque élément (25) a une section rectangulaire et comporte, sur sa face disposée en regard du cordon de soudure, une gorge (26).

## Patentansprüche

1. Verfahren zum Zusammenbauen von Spantenwerkteilen (10) von Tragpfeilern (2) einer Ölplattform, bei dem:
auf jede Hauptseite einer rechteckigen Platte (12) von außen eine Aussteifung (13) in Form einer Halbschale geschweißt wird, wobei die rechteckige Platte (12) auf jeder ihrer Seitenflächen Zähne (14) aufweist, die eine Zahnstange bilden,
mehrere rechteckige Platten (12), die mit den Versteifungen (13) versehen sind, aneinanderstoßend geschweißt werden, um ein Spantenwerkteil (10) zu bilden, wobei jede Aussteifung (13) eine Länge aufweist, die geringer ist als die Länge einer Platte (12), um auf der Höhe der Schweißnaht der Platten (12) untereinander einen freien Raum zwischen zwei benachbarten Aussteifungen (13) zu schaffen,
auf der Höhe jedes freien Raums und in der Verlängerung der Aussteifungen (13) ein Verbindungsteil (15) in Form einer Halbschale angeordnet wird, und
von außen jedes Verbindungsteil (15) auf die Hauptseite der Platten (12) und auf die Ränder der benachbarten Aussteifungen geschweißt wird, um auf jeder Seite der Platten durchgehende Aussteifungen zu bilden, dadurch gekennzeichnet, daß vor der Positionierung und der Verschweißung jeder Aussteifung (13) und jedes Verbindungsteils (15) auf dem Innenrand jeder Verbindungszone einerseits der Aussteifung (13) mit den Platten (12) und andererseits des Verbindungsstücks (15) mit den Platten (12) und den Aussteifungen (13) eine Keramikleiste (21a, 21b; 22a, 22b) angeordnet wird, die an das Profil jeder Verbindungszone angepaßt ist und dazu bestimmt ist, die Wurzel der Schweißwulst zu formen.

2. Vorrichtung umfassend die durch das Zusammenbauverfahren gemäß Anspruch 1 zusammengebauten Spantenwerkteile, wobei die Spantenwerkteile (10) Tragpfeiler (2) einer Ölplattform bilden, wobei jedes Spantenwerkteil Teilstücke (11) aufweist, die jeweils durch eine rechteckige Platte (12) gebildet sind, die dazu bestimmt ist, anstoßend mit der rechteckigen Platte (12) der benachbarten Teilstücke (11) verschweißt zu werden und auf jeder ihrer Seitenflächen Zähne (14) aufweist, die eine Zahnstange bilden, eine Aussteifung (13) in Form einer Halbschale, die auf jede Hauptseite der rechteckigen Platte (12) geschweißt ist, wobei jede Aussteifung (13) eine Länge besitzt, die geringer ist als die Länge einer Platte (12), um auf der Höhe der Schweißnaht von zwei benachbarten Platten (12) einen freien Raum festzulegen, und Verbindungsteile (15) in Form einer Halbschale, die auf jede Hauptseite der Platten (12) und auf den Rand jeder benachbarten Aussteifung (13) geschweißt sind, um durchgehende Aussteifungen auf jeder Seite der Platten (12) zu bilden, dadurch gekennzeichnet, daß es einerseits eine Schweißeinrichtung für die Aussteifungen (13) auf den Hauptseiten der Platten (12) und andererseits Verbindungsteile (15) auf den Hauptseiten der Platten (12) und auf den Rändern jeder benachbarten Aussteifung (13) und eine Abformeinrichtung (21a, 21b; 22a, 22b) für die Wurzel der Schweißwülste der Aussteifungen (13) und der Verbindungsteile (15) aufweist, die auf dem Innenrand jeder Verbindungszone der Aussteifungen (13) mit den rechteckigen Platten (12) und der Verbindungsteile (15) mit den rechteckigen Platten (12) und den Aussteifungen (13) angeordnet sind.

3. Vorrichtung nach Anspruch 2, dadurch gekennzeichnet, daß die Ausformungseinrichtung für die Wurzel der Schweißwülste durch Keramikleisten (21a, 21b; 22a, 22b) gebildet sind, die auf einer Stütze (23, 24) angebracht sind, die mit dem Spantenwerkteil (10) durch die Verbindungsorgane verbunden sind.

4. Vorrichtung nach Anspruch 3, dadurch gekennzeichnet, daß die Keramikleisten (21a, 21b) dazu bestimmt sind, die Wurzeln der Schweißwülste der Aussteifungen (13) und der Verbindungsteile (15) mit den rechteckigen Platten (12) zu verbinden, einen Querschnitt in Form eines Dreiecks aufweisen, dessen Spitzen verrundet sind.

5. Vorrichtung nach Anspruch 4, dadurch gekennzeichnet, daß die Leisten (21a, 21b) durch unabhängige Elemente (28) gebildet und miteinander durch ein Spannkabel (29) verbunden sind, daß diese Elemente durchsetzt.

6. Vorrichtung nach Anspruch 3, dadurch gekennzeichnet, daß die Keramikleisten (22a, 22b), die dazu bestimmt sind, die Wurzeln der Schweißwülste zwischen den Verbindungsteilen (15) und den Aussteifungen (13) zu formen durch Elemente (25) gebildet sind, die untereinander gelenkig verbunden sind, um sich an den Krümmungshalbmesser der Aussteifungen (13) anzuschmiegen.

7. Vorrichtung nach Anspruch 6, dadurch gekennzeichnet, daß jedes Element (25) einen rechteckigen Querschnitt aufweist, und auf seiner Seite, die der Schweißwulst gegenüberliegt, eine Rille (26) aufweist.

## Claims

1. Process for assembling the girders (10) of the support legs (2) of an oil-drilling platform, wherein:
a reinforcer (13) in the form of a half-shell is welded from the outside onto each main surface of a rectangular plate (12), said rectangular plate (12) comprising on each of its side faces teeth (14) forming a rack,
a plurality of rectangular plates (12) fitted with said reinforcers (13) are welded end to end to form a girder (10), each reinforcer (13) being shorter in length than a plate (12) so as to define, at the location of the weld between the plates (12), a free space between two adjacent reinforcers (13),
a connecting member (15) in the form of a half-shell is positioned level with each free space and on an extension of the reinforcers (13),
and each connecting member (15) is welded from the outside on to the main surface of the plates (12) and on to the edges of the adjacent reinforcers to form continuous reinforcers on each side of said plates, characterised in that, prior to the positioning and welding of each reinforcer (13) and each connecting member (15), a ceramic panel (21a, 21b; 22a, 22b) adapted to the profile of each connecting zone and intended to mould the root of the weld seam is placed on the inner edge of each connecting zone between, on the one hand, the reinforcer (13) and the plates (12) and, on the other hand, the connecting member (15) and the plates (12) and reinforcers (13).

2. Apparatus comprising girders assembled by the assembly process according to claim 1, the girders (10) forming the support legs (2) of an oil-drilling platform, each girder comprising sections (11) each of which is formed by a rectangular plate (12) intended to be butt-welded to the rectangular plate (12) of the adjacent sections (11) and comprising, on each of its side faces, teeth (14) forming a rack, a reinforcer (13) in the form of a half-shell welded to each main surface of the rectangular plate (12), each reinforcer (13) being shorter in length than a plate (12) so as to define a free space at the location of the weld between two adjacent plates (12), and connecting members (15) in the form of half-shells welded to each main surface of the plates (12) and the edge of each adjacent reinforcer (13) in order to form continuous reinforcers on each side of said plates (12), characterised in that it comprises means for welding, on the one hand, the reinforcers (13) to the main surfaces of the plates (12) and, on the other hand, the connecting members (15) to the main surfaces of the plates (12) and to the edges of each adjacent reinforcer (13) and means (21a, 21b; 22a, 22b) for moulding the root of the weld seams of the reinforcers (13) and the connecting members (15), located on the inner edge of each connecting zone of said reinforcers (13) with the rectangular plates (12) and said connecting members (15) with the rectangular plates (12) and the reinforcers (13).

3. Apparatus according to claim 2, characterised in that the means for moulding the root of the weld seams consist of ceramic panels (21a, 21b; 22a, 22b) mounted on a support (23, 24) connected to the girder (10) by connecting means.

4. Apparatus according to claim 3, characterised in that the ceramic panels (21a, 21b) adapted to mould the roots of the weld seams of the reinforcers (13) and the connecting members (15) with the rectangular plates (12) have a section in the shape of a triangle with rounded apexes.

5. Apparatus according to claim 4, characterised in that the panels (21a, 21b) are formed by independent elements (28) connected to one another by a tensioning cable (29) passing through said elements.

6. Apparatus according to claim 3, characterised in that the ceramic panels (22a, 22b) intended to mould the roots of the weld seams between the connecting members (15) and the reinforcers (13) are formed by elements (25) articulated on one another so as to adapt to the radius of curvature of said reinforcers (13).

7. Apparatus according to claim 6, characterised in that each element (25) is rectangular in section and comprises a groove (26) on its surface facing the weld seam.
